# EUROPÄISCHE PATENTSCHRIFT

(11) **EP 0 418 742 B1**
(45) Veröffentlichungstag und Bekanntmachung des Hinweises auf die Patenterteilung: **08.03.1995**
(21) Anmeldenummer: 90117681.8
(22) Anmeldetag: 13.09.1990
(51) Int. Cl.: G09C 5/00, G09C 1/10, H04N 1/44, H04L 9/00

(54) **Verfahren und Vorrichtung zur geschützten Datenübertragung**
Method and device for secure data transmission
Procédé et dispositif pour la transmission confidentielle de données

(30) Priorität: 18.09.1989 CH 3378/89
(43) Veröffentlichungstag der Anmeldung: 27.03.1991
(73) Patentinhaber: OMNISEC AG, 8105 Regensdorf (CH)
(72) Erfinder: Bühn, Willi, CH-8617 Mönchaltorf (CH); Näf, Erich, CH-8165 Schöfflisdorf (CH)

(56) Entgegenhaltungen:
- EP-A- 0 278 740
- DE-A- 3 230 201
- FR-A- 1 604 504
- FR-A- 2 439 444
- GB-A- 2 057 172
- GB-A- 2 101 376
- US-A- 3 969 830

## Beschreibung

Die Erfindung betrifft ein Verfahren zur geschützten Datenübertragung mit einem Telekopiersystem, das ein Sendegerät, ein Empfangsgerät und eine dazwischenliegende Uebertragungsstrecke umfasst, sowie je eine senderseitige und empfängerseitige Vorrichtung zur Ausführung des Verfahrens.

Es ist dabei zu verstehen, dass im Zusammenhang mit der Definition der Erfindung und mit der Ausführung des erfindungsgemässen Verfahrens kein Unterschied zwischen "Gerät", "Vorrichtung", "Apparat" und anderen Worten analoger Bedeutung zu unterstellen ist. Die verschiedenen Teile des zur Ausführung des Verfahrens nötigen Systems, die sich in bezug auf die Uebertragungsstrecke sender- bzw. empfängerseitig befinden, können sowohl getrennt als auch teilweise oder alle zusammen integriert sein.

Ausserdem ist dabei zu verstehen, dass im Zusammenhang mit der Definition der Erfindung und mit der Ausführung des erfindungsgemässen Verfahrens:

Die Qualifikation eines Merkmals als "sichtbar" bedeutet, dass die Anwesenheit dieses Merkmals von Auge feststellbar ist. Sie bedeutet jedoch nicht, dass das Sichtbare eindeutig als Zeichen, Symbol, Code oder dergleichen erkennbar ist, und noch weniger, dass das Sichtbare eindeutig Träger einer vom Menschen verwertbaren Information ist. Zum Beispiel sind auf einem Dokument zufallsmässig verteilte Flecken "sichtbar", darin erkennt man jedoch keine Schrift und gar keinen Sinn.

Die Qualifikation eines Merkmals als "lesbar" bedeutet, dass die Anwesenheit dieses Merkmals von Auge feststellbar und das Sichtbare eindeutig als Zeichen, Symbol, Code oder dergleichen erkennbar ist. Sie bedeutet jedoch nicht, dass das Sichtbare eindeutig Träger einer vom Menschen verwertbaren Information ist. Zum Beispiel sind auf einem Dokument geordnet aneinandergereihte Schriftzeichen einer unbekannten Sprache "lesbar", darin erkennt man jedoch keinen Sinn, also keine Information.

Die Qualifikation eines Merkmals als "verständlich" bedeutet, dass (i) die Anwesenheit dieses Merkmals von Auge feststellbar und (ii) das Sichtbare eindeutig als Zeichen, Symbol, Code oder dergleichen erkennbar sowie (iii) eindeutig Träger einer vom Menschen verwertbaren Information ist. Zum Beispiel sind auf einem Dokument in bekannter Schrift und Sprache geschriebene Texte "verständlich".

Grafische Darstellungen können je nach ihrer Beschaffenheit sichtbar, lesbar oder verständlich sein.

Das Verschlüsseln (Chiffrieren) macht verständliche Daten unverständlich, belässt sie jedoch als lesbar. Das Entschlüssein (Dechiffrieren) macht unverständliche aber lesbare Daten verständlich.

Da verschlüsselte Daten nicht verständlich sind, sind für deren Uebertragung in einem Telekopiersystem Massnahmen erforderlich, um deren Lesbarkeit zu gewährleisten, weil unlesbare Teile der Daten nicht mehr entschlüsselt werden können, was bedeutet, dass ein Teil der zu übertragenden Mitteilung endgültig verlorengegangen ist.

Die nächstliegende Massnahme zur Uebertragung von verschlüsselten Daten unter Gewährleistung der Entschlüsselungsmöglichkeit ist schlechthin die fehlerfreie Datenübertragung.

Eine fehlerfreie Datenübertragung über eine nicht verzerrungsfreie Uebertragungsstrecke wird im allgemeinen mit Hilfe von Uebertragungsprotokollen und/oder durch Uebertragung zusätzlicher Information erreicht: Diese Massnahmen erlauben eine Regeneration der verzerrten Information. Die benötigte zusätzliche Information kann beispielsweise darin bestehen, dass die Information in Schriftzeichen codiert wird, die von einem Lesegerät trotz einer gewissen Verzerrung noch erkennbar sein können (zu diesem Zweck hat man beispielsweise die OCR-Schriften geschaffen). Die Uebertragungsstrecke muss aber noch immer gewisse Mindestanforderungen an Uebertragungssicherheit erfüllen, und nur wenn diese Mindestanforderungen erfüllt sind, ist es möglich, verschlüsselte und somit nicht verständliche Daten zu übertragen.

Diese Mindestanforderungen sind jedoch nicht erfüllt, wenn die Uebertragungsstrecke fehlerbehaftet ist und/oder eine optische Schnittstelle umfasst, die einen hohen Verzerrungsgrad aufweist. Dann nämlich werden die Uebertragungsfehler so zahlreich und/oder solcher Art, dass keine Fehlerkorrektur möglich ist, was die Uebertragung von verschlüsselten und somit nicht verständlichen Daten verunmöglicht.

Das heutzutage übliche Telekopiersystem, das ein Dokument zeilenweise abtastet und eine Kopie davon zeilenweise erstellt, ist ein Beispiel einer Uebertragungsstrecke mit einer optischen Schnittstelle, die einen hohen Verzerrungsgrad aufweist. Bekanntlich ist bei einem Telekopiersystem die Wiedergabe des Originals auf der Telekopie bereits in Zeilenrichtung oft mangelhaft (ganze Zeilen können fehlen), obschon in einem noch tragbarem Mass. Hingegen erscheinen rechtwinklig zur Zeilenrichtung (d.h. in Richtung des Papiertransports) oft grobe Verzerrungen, die so schlimm sein können, dass Textteile fehlen oder derart unlesbar sind, dass eine Person den Sinn eines Klartexts anhand der Kopie nicht einmal erraten kann und die Wiederholung der Uebertragung verlangen muss.

Es sind bereits Telekopiersysteme in Entwicklung, die ein Dokument nicht mehr explizit zeilenweise abtasten und eine Kopie davon zeilenweise erstellen. Beispielsweise kann das Dokument mit Hilfe einer Matrix von CCD-Sensoren abgetastet werden, was im Extremfall keine serielle, sondern eine vollständig parallele Abtastung ergibt. Dennoch müssen die von der Matrix gelieferten Signale auf einer einkanaligen Uebertragungsstrecke rein seriell (Bit für Bit) übertragen werden. Auf einer mehrkanaligen Uebertragungsstrecke erfolgt die Uebertragung zwar parallel (alle Bits z.B. eines Bytes oder Wortes parallel), die Bytes oder Wörter werden aber trotzdem seriell übertragen. Solche Telekopiersysteme arbeiten also doch noch seriell, obschon dies nur implizit ist.

Die gleichen mit der seriellen Uebertragung verbundenen Probleme bleiben dabei zu lösen, gleichgültig, ob das Telekopiersystem explizit oder implizit seriell arbeitet.

Wenn es sich bei der übertragenen Information um verschlüsselte Daten handelt, die also nicht verständlich sind, besteht keine Möglichkeit mehr, mit Hilfe des menschlichen Intellekts Fehler zu korrigieren bzw. fehlende Daten zu regenerieren. Diese Tatsache ergibt sich daraus, dass verschlüsselte Daten den Charakter von Zufallsdaten haben. Unter solchen Umständen ist die Uebertragung von verschlüsselten und somit nicht verständlichen Daten ausgeschlossen.

Es besteht jedoch ein Bedarf für die Uebertragung von verschlüsselten und somit nicht verständlichen Daten über ein übliches Telekopiersystem. Beispielsweise sind Geschäftsleute auf Reisen daran interessiert, die heutzutage in modernen Hotels und Pressebüros von Ausstellungen, Messen usw. vorhandenen und der Oeffentlichkeit zugänglichen Telekopiermöglichkeiten zu nutzen, um Mitteilungen bequem und schnell zu übertragen. Andererseits besteht gerade unter diesem Umständen eine grosse Gefahr, dass auch die Konkurrenten von diesem Informationsverkehr am Telekopiersystem ungebührlich Kenntnis erhalten, beispielsweise indem sie zufällig oder absichtlich die Mitteilungen beispielsweise auf dem Telekopierer, im Pressebüro oder gar durch Anzapfen der Uebertragungsstrecke mitlesen.

Es war also längst erwünscht, jedoch bisher nicht möglich, eine geheimzuhaltende Information mit Hilfe eines vollständig üblichen, öffentlich zugänglichen Telekopiersystems lesbar aber nicht verständlich zu übertragen. Die häufig mangelnde und stark streuende Qualität der Datenübertragung eines Telekopiersystems erlaubte bisher nicht, einen Klartext oder eine Grafik in verschlüsselte Daten zu wandeln, diese beispielsweise in OCR-Schrift oder noch in beliebige Symbolen auf Papier zu schreiben, das resultierende Dokument durch ein übliches, öffentlich zugängliches Telekopiersystem übertragen zu lassen, die übertragene Kopie des Dokuments mit einem Lese- und Erkennungsgerät (beispielsweise mit einem Scanner mit Erkennungsprogramm für OCR-Schrift bzw. Symbole) aufzunehmen, die Signale aus dem Lese- und Erkennungsgerät in einem Dechiffriergerät zu entschlüsseln und die entschlüsselten Daten zu drucken oder am Bildschirm anzuzeigen: Die Uebertragung durch ein übliches Telekopiersystem ist zu schlecht, um empfängerseitig zu gewährleisten, dass alle OCR-Zeichen bzw. Symbole fehlerlos erkannt werden, während man nicht wie beim Klartext eine Unsicherheit durch Verstandestätigkeit beheben kann, weil die Daten verschlüsselt sind. Im ungünstigsten Fall kann ein Lesefehler am Anfang der übertragenen Mitteilung auftreten und die Entschlüsselung der gesamten Information verunmöglichen.

Jüngste Entwicklungen auf dem Gebiet der Telekopiersysteme lassen zwar erwarten, dass bald solche Telekopiersysteme erhältlich werden, mit denen auch OCR-Schrift mit hinreichender Uebertragungsqualität und optischer Auflösung verarbeitet wird, womit empfängerseitig gewährleistet wäre, dass alle OCR-Zeichen fehlerlos erkannt werden. Der grosse vorhandene Bestand an üblichen Telekopiersystemen wird aber nicht, und sei es auch nur aus Kostengründen, sofort und überall durch Telekopiersysteme dieser neuen Generation ersetzt werden. Die vorangehend erwähnten Nachteile der üblichen Telekopiersysteme werden also längere Zeit noch bestehenbleiben und zu überwinden sein.

Aufgabe der Erfindung ist es daher, eine geschützte Datenübertragung von nicht verständlichen Daten unter Verwendung von üblichen Telekopiersystemen zu ermöglichen.

Es ist bekannt, die zu übermittelnden "ursprünglichen" Daten einem Chiffrier- und Ausgabegerät einzugeben, das sie verschlüsselt und die resultierenden verschlüsselten Daten auf einem Lochstreifen ausgibt. Der Lochstreifen trägt als Löcher im Papierstreifen lesbare Daten, die aber in ihrer verschlüsselten Form für Unbefugte nicht verständlich sind. Der Lochstreifen wird nun einem Sendegerät zugeführt, das die auf dem Lochstreifen lesbaren Daten zeilenweise in Kombination mit Zeilenvorschub abtastet. Das Resultat der Abtastung wird in einer in elektrische Signale gewandelten Form vom Sendegerät über eine Uebertragungsstrecke zu einem Empfangsgerät übertragen. Das Empfangsgerät erstellt aus den empfangenen Signalen eine Kopie des Lochstreifens, auf der die Daten lesbar aber in ihrer verschlüsselten Form für Unbefugte nicht verständlich sind. Diese Kopie wird einem Lese- und Dechiffriergerät zugeführt, das die Daten vom Lochstreifen liest, sie entschlüsselt und die resultierenden entschlüsselten Daten einem Ausgabegerät zuführt, das die ursprünglichen Daten nachbildet und auf Papier oder am Bildschirm zur weiteren Verarbeitung (beispielsweise durch Visualisierung zur Maschinensteuerung und dergleichen) als verständliche Daten bereitstellt.

Diese bekannte Art der geschützten Datenübertragung funktioniert nur im Zusammenhang mit einem Lochstreifenstanzer und einem Lochstreifenleser, die mit dem üblichen öffentlichen Telexsystem, jedoch nicht mit dem üblichen öffentlichen Telekopiersystem kompatibel sind. Es ist aber bekannt, dass der öffentliche Telexverkehr heutzutage schwindet, während der öffentliche Telekopierverkehr stark anwächst: Eine auf Lochstreifen und Telexverkehr beruhende Lösung entspricht also nicht den heutigen Gegebenheiten und Benutzerwünschen. Das Telekopieren eines Lochstreifens ist keine vernünftige Alternative dazu.

Aus DE-A-3230201 ist ein System zur geschützten Datenübertragung bekannt, welches mit einem Telekopiersystem versehen ist, das ein Sendegerät, ein Empfangsgerät und eine dazwischenliegende Uebertragungsstrecke umfasst. In diesem System ist das Telekopiersystem kein vollständig übliches, öffentlich zugängliches Telekopiersystem. Das Chiffriergerät ist mit dem Sendegerät und das Dechiffriergerät mit dem Empfangsgerät integriert. Dieses System löst also die vorstehend angegebene Aufgabe der Erfindung nicht.

Aus GB-A-2057172 und GB-A-2101376 sind Verfahren und Vorrichtungen zum Chiffrieren und Dechiffrieren von verständlichen Daten bekannt. Die chiffrierten Daten sind auf einem Dokument als Balkencode ("bar code") lesbar. Diese Verfahren und Vorrichtungen stehen in keinem Zusammenhang mit irgendwelchem Telekopiersystem und die in GB-A-2057172 und GB-A-2101376 offenbarte Lehre befasst sich in keiner Weise mit der Ueberwindung von Uebertragungsproblemen. Diese Verfahren und Vorrichtungen können also zur Lösung der vorstehend angegebenen Aufgabe der Erfindung nichts beitragen.

Zur Lösung der vorstehend angegebenen Aufgabe der Erfindung ist das erfindungsgemässe Verfahren zur geschützten Datenübertragung mit einem Telekopiersystem, das ein Sendegerät, ein Empfangsgerät und eine dazwischenliegende Uebertragungsstrecke umfasst, dadurch gekennzeichnet, dass in Kombination
- die ursprünglichen verständlichen Daten einem Chiffriergerät eingegeben werden, das sie verschlüsselt und die resultierenden verschlüsselten Daten in entsprechende erste elektrische Signale wandelt,
- die ersten Signale einem Ausgabegerät zugeführt werden, das ein Dokument erstellt, auf dem die verschlüsselten Daten in einem gegenüber Uebertragungsfehlern des Telekopiersystems im wesentlichen unempfindlichen Code lesbar sind,
- das Dokument einem Sendegerät zugeführt wird, das die auf dem Dokument lesbaren Daten abtastet und das Resultat der Abtastung in zweite elektrische Signale wandelt,
- die zweiten Signale vom Sendegerät über die Uebertragungsstrecke zum Empfangsgerät übertragen werden,
- das Empfangsgerät aus den empfangenen zweiten Signalen eine Kopie des Dokuments erstellt, auf der die Daten in dem gegenüber Uebertragungsfehlern des Telekopiersystems im wesentlichen unempfindlichen Code lesbar sind,
- die Kopie einem Lesegerät zugeführt wird, das die auf der Kopie lesbaren Daten liest und in dritte elektrische Signale wandelt,
- die dritten Signale einem Dechiffriergerät zugeführt werden, das die von den dritten Signalen dargestellten verschlüsselten Daten entschlüsselt und die resultierenden entschlüsselten Daten in vierte elektrische Signale wandelt, und
- die vierten Signale einem Ausgabegerät zugeführt werden, das daraus die ursprünglichen Daten nachbildet und als verständliche Daten zur weiteren Verarbeitung bereit stellt.

Ausserdem wird erfindungsgemäss eine Ausbildung des zur Ausführung des Verfahrens nötigen Systems bevorzugt, die einen einzigen integrierten senderseitigen Systemteil und einen einzigen integrierten empfängerseitigen Systemteil umfasst.

Die Erfindung geht dabei von der Erkenntnis aus, dass die schwersten von einem Telekopiersystem verursachten Verzerrungen in Richtung des Papiervorschubs erfolgen. Daher verwendet das erfindungsgemässe Verfahren vorzugsweise einen Code, der im wesentlichen gegenüber den in einem Telekopiersystem auftretenden Verzerrungen in Richtung des Zeilenvorschubs unempfindlich ist. Zur Erreichung einer bestmöglichen Kompatibilität mit einem Telekopiersystem verwendet das erfindungsgemässe Verfahren vorzugsweise einen Code der angegebenen Art, der ausserdem ein binärer Code ist, dessen logische Werte an einem Kontrast in Helligkeit und/oder Farbe zwischen beschrifteten und unbeschrifteten Teilen des Dokuments unterscheidbar sind.

Die Erfindung geht ausserdem von der Erkenntnis aus, dass der an sich bekannte Balkencode ("bar code") gegen Verzerrungen parallel zur Längsrichtung der Balken praktisch unempfindlich sind. Daher verwendet das erfindungsgemässe Verfahren als Code vorzugsweise einen Balkencode, der mit parallel zur Richtung des Zeilenvorschubs orientierten Balken geschrieben ist.

Vorzugsweise werden dabei die auf der Kopie lesbaren Daten von einer Balkencode-Lesevorrichtung gelesen, die beispielsweise ein Lesestift, ein Schriftlesegerät ("scanner") und dergleichen sein kann. Dies bringt den Vorteil, dass z.B. Geschäftsleute eine Mitteilung auch auf Reisen, beispielsweise im Hotel oder gar unterwegs im Zug oder im Flugzeug, mit tragbarem Material entschlüsseln können, da als Lesegerät beispielsweise handliche Balkencode-Lesestifte heutzutage bekannt und kostengünstig erhältlich sind, während als Dechiffriergerät ein tragbarer Computer ("laptop") und dessen Bildschirm oder tragbarer Drucker als Ausgabegerät verwendbar sind.

Selbstverständlich kann das erfindungsgemässe Verfahren als Code auch OCR-Zeichen verwenden, wenn das Telekopiersystem fähig ist, auch OCR-Schrift mit hinreichender Uebertragungsqualität und optischer Auflösung zu verarbeiten, so dass empfängerseitig gewährleistet ist, dass alle OCR-Zeichen fehlerlos erkannt werden.

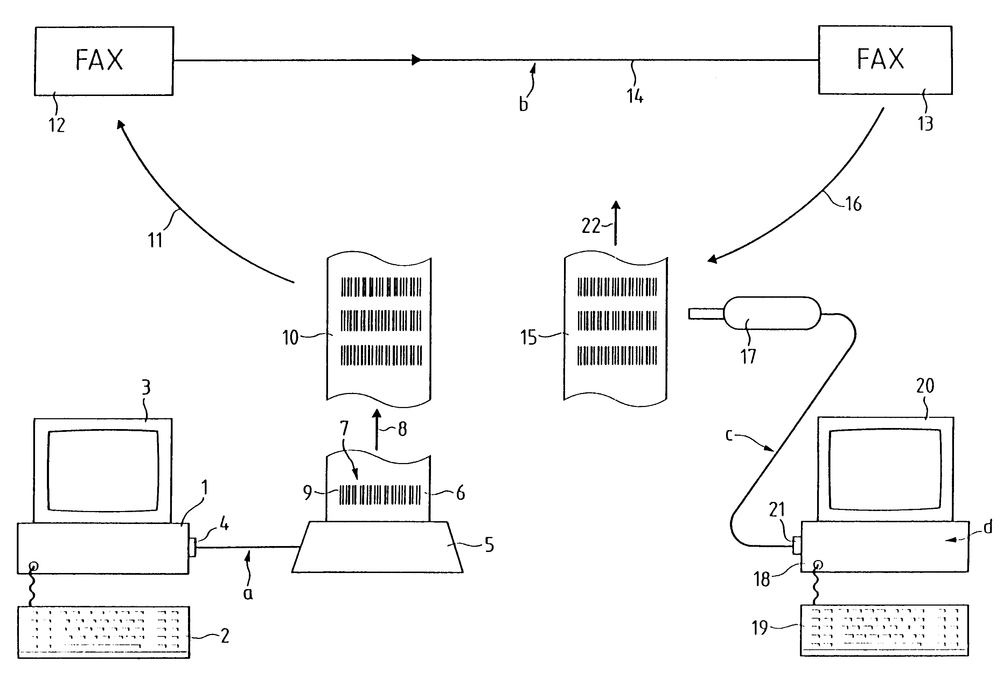

Die Erfindung wird nun im nachstehenden anhand eines Beispiels des Verfahrens und der beigefügten Zeichnung näher beschrieben.

Die Figur zeigt ein Beispiel einer Einrichtung zur geschützten Datenübertragung, mit deren Hilfe das erfindungsgemässe Verfahren durchgeführt wird.

Ein Chiffriergerät 1 besteht im dargestellten Beispiel aus einem Computer mit Tastatur 2 und Bildschirm 3, der zum Betrieb als Chiffriergerät programmiert ist. Die Daten, die geschützt zu übertragen sind (die "ursprünglichen" Daten), werden mit Hilfe der Tastatur 2 eingegeben. Im Chiffriergerät 1 werden diese Daten nach einem geeigneten Chiffriersystem verschlüsselt. Solche Chiffriersysteme sind an sich bekannt. Die resultierenden verschlüsselten Daten werden vom Chiffriergerät 1 in entsprechende erste elektrische Signale gewandelt und an einem Ausgang 4 des Chiffriergeräts 1 zur Weiterleitung bereitgestellt. Im beschriebenen Beispiel ist der Ausgang 4 ein serieller Ausgang des Computers und die ersten elektrischen Signale entsprechen einem Satz von alphanumerischen und grafischen Zeichen, z.B. einer Teilmenge des ASCII-Zeichensatzes. Es sind aber Varianten möglich, beispielsweise ein Parallelausgang und/oder auch ein anderer Zeichensatz, z.B. EBCDIC und dergleichen.

Vom Ausgang 4 des Chiffriergeräts 1 werden die ersten elektrischen Signale einem Ausgabegerät 5 zugeführt, das im beschriebenen Beispiel ein Drucker ist, beispielsweise ein üblicher Laser-Drucker. Im beschriebenen Beispiel erscheinen die genannten ersten elektrischen Signale a unter anderem auf einer den Ausgang 4 mit dem Ausgabegerät 5 verbindenden Leitung, was mit dem entsprechenden, auf diese Leitung weisenden Pfeil angedeutet ist. Das Ausgabegerät 5 erstellt aus den ersten elektrischen Signalen ein Dokument 6 auf Papier, auf dem die Daten als Balkencode 7 ("bar code") mit parallel zur Richtung 8 des Zeilenvorschubs des Druckers orientierten Balken 9 geschrieben sind. Diese Daten sind zwar lesbar, jedoch in ihrer verschlüsselter Form nicht verständlich. Balkencodes sind an sich bekannt, im beschriebenen Beispiel kann der Balkencode 7 beispielsweise ein als Code 128(B) oder als Code 39 bekannter Balkencode sein.

Das Dokument 6 wird dann vom Drucker abgenommen und als eigenständiges Dokument 10 weiter behandelt.

Erfindungsgemäss wird nun das Dokument 10 von einem Telekopiersystem übertragen, um davon eine Telekopie bereitzustellen. Telekopiersysteme sind an sich wohlbekannt und daher sind ein Telekopie-Sendegerät 12 und ein Telekopie-Empfangsgerät 13, die miteinander über eine Uebertragungsstrecke 14 verbunden sind, in der Zeichnung nur angedeutet.

Das Dokument 10 wird, wie mit dem Pfeil 11 symbolisiert, dem Telekopie-Sendegerät 12 zugeführt. Bekanntlich werden im Telekopie-Sendegerät 12 die auf dem Dokument 10 lesbaren Daten, d.h. der Balkencode 7, zeilenweise in Kombination mit Zeilenvorschub abgetastet. Das Resultat dieser Abtastung wird im Telekopie-Sendegerät 12 in zweite elektrische Signale gewandelt, die über die Uebertragungsstrecke 14 zum Telekopie-Empfangsgerät 13 übertragen werden. Im beschriebenen Beispiel erscheinen die genannten zweiten elektrischen Signale b unter anderem auf der Uebertragungsstrecke 14, was mit dem entsprechenden, auf die Uebertragungsstrecke 14 weisenden Pfeil angedeutet ist.

Aus den empfangenen zweiten Signalen erstellt das Telekopie-Empfangsgerät 13 eine Telekopie 15 des Dokuments 10, auf der die Daten in verschlüsselter Form lesbar aber nicht verständlich sind.

Diese Telekopie 15 wird dann dem Telekopie-Empfangsgerät 13 entnommen, wie mit dem Pfeil 16 symbolisiert, und einem Lesegerät 17 zugeführt, das die auf der Telekopie 15 lesbaren Daten liest und in dritte elektrische Signale c wandelt. Im beschriebenen Beispiel ist das Lesegerät 17 ein handelsüblicher, an einen Computer anschliessbarer Balkencode-Lesestift, der von Hand betätigt wird. Es sind aber Varianten des Lesegeräts 17 möglich, beispielsweise als automatisch betriebene Tischgerät-Ausführung oder als Schriftlesegerät ("scanner") und dergleichen.

Ein Dechiffriergerät 18 besteht aus einem Computer mit Tastatur 19 und Bildschirm 20, der zum Betrieb als Dechiffriergerät programmiert ist. Die dritten Signale werden vom Lesegerät 17 zum Dechiffriergerät 18 zugeführt, im beschriebenen Beispiel über einen seriellen Eingang 21 des Computers. Es sind aber Varianten möglich, beispielsweise ein Paralleleingang, ein direkter Bus-Anschluss und dergleichen. Im beschriebenen Beispiel erscheinen die genannten dritten elektrischen Signale c unter anderem auf einer das Lesegerät 17 mit dem Dechiffriergerät 18 verbindenden Leitung, was mit dem entsprechenden, auf diese Leitung weisenden Pfeil angedeutet ist.

Im Dechiffriergerät 18 werden die von den dritten Signalen dargestellten verschlüsselten Daten entsprechend dem beim Verschlüsseln verwendeten Chiffriersystem entschlüsselt. Ein solches Dechiffriersystem ist an sich bekannt. Die resultierenden entschlüsselten Daten werden in vierte elektrische Signale gewandelt und im beschriebenen Beispiel dem als Ausgabegerät dienenden Bildschirm 20 zugeführt, um darauf angezeigt zu werden. Im beschriebenen Beispiel erscheinen die genannten vierten elektrischen Signale d unter anderem auf einer nicht dargestellten, auf bekannte Weise das Dechiffriergerät 18 mit dem Bildschirm 20 verbindenden Leitung, was mit dem entsprechenden, auf den Körper des Dechiffriergeräts 18 weisenden Pfeil angedeutet ist. Auf dem Bildschirm 20 werden also die ursprünglichen Daten in ihrer verständlichen Form nachgebildet und zur weiteren Verarbeitung bereitgestellt. Wiederum sind hier Varianten möglich, beispielsweise eine Ausgabe der Daten auf einem Drucker mit oder ohne gleichzeitige Anzeige auf dem Bildschirm 20, eine Weitergabe an eine numerische Datenverarbeitungsanlage, oder auch nur das Speichern in einer Datei auf einer Diskette in Bereitschaft zur weiteren Verarbeitung.

Es ist ersichtlich, dass eine Datenübertragung nach dem erfindungsgemässen Verfahren über ein übliches Telekopiersystem erfolgen kann, wobei eine geschützte Datenübertragung dennoch gewährleistet ist. Die ursprünglichen verständlichen Daten sind weder auf dem Dokument 10 noch auf der Telekopie 15 erkennbar. Hingegen sind sowohl auf dem Dokument 10 wie auch auf der Telekopie 15 lesbare Daten vorhanden und erkennbar, wobei für die jeweilige Weiterverarbeitung noch von Vorteil ist, dass sich der Umfang der Daten abschätzen lässt.

Da der Balken-Code mit parallel zur Richtung 8 des Zeilenvorschubs des Druckers orientierten Balken 9 geschrieben ist, ist der auf der Telekopie 15 übertragene Balken-Code im wesentlichen unempfindlich gegenüber Uebertragungsfehlern des Telekopiersystems parallel zur entsprechenden Richtung 22 des Zeilenvorschubs auf der Telekopie 15, er beseitigt also im wesentlichen die Probleme, die von den in einem Telekopiersystem auftretenden Verzerrungen in Richtung des Zeilenvorschubs verursacht werden.

Rechtwinklig zur Richtung 22 ist die Empfindlichkeit gegenüber Uebertragungsfehlern des Telekopiersystems abhängig vom Auflösungsvermögen des Lesegeräts 17: Je geringer dieses Auflösungsvermögen ist, desto toleranter ist die Datenübertragung gegenüber Uebertragungsfehlern des Telekopiersystems. Der Preis dafür ist, dass die Uebertragung langsamer wird, weil die Informationsdichte kleiner ist. Die Uebertragungsgeschwindigkeit steht also im Kompromiss zur Auflösung, mit welcher die Daten in einem gegenüber Uebertragungsfehlern des Telekopiersystems im wesentlichen unempfindlichen Code geschrieben und gelesen werden. Das Erreichen dieses Kompromisses ist dem Fachmann anhand von einigen Versuchen ohne erfinderisches Dazutun möglich.

Es ist grundsätzlich möglich, anstelle des Balken-Codes einen anderen binären Code zu verwenden, um die Daten auf dem Dokument 10 und auf der Telekopie 15 darzustellen. Kennzeichnend ist für einen geeigneten binären Code, dass dessen logische Werte an einem Kontrast in Helligkeit und/oder Farbe zwischen beschrifteten und unbeschrifteten Teilen des Dokuments unterscheidbar sind. Diese Vorschrift unterscheidet einen solchen Code beispielsweise von einem auf Papier gestanzten Lochstreifen-Code. Auch der geeignete Helligkeits- und/oder Farbkontrast ist vom Fachmann anhand von einigen Versuchen ohne erfinderisches Dazutun feststellbar. Dabei ist der vom Ausgabegerät 5 zu fordernde Wert des Kontrasts zwischen beschrifteten und unbeschrifteten Teilen des Dokuments 6 abhängig unter anderem von den Eigenschaften des Telekopiersystems und des Lesegeräts 17, so dass die Angabe eines Werts des Kontrasts nur unter Angabe einer spezifizierten Einrichtung sinnvoll ist. Ausserdem würde eine solche Angabe nur den Eigenschaften momentan erhältlicher Einrichtungen entsprechen und Weiterentwicklungen dieser Einrichtungen nicht berücksichtigen.

Im vorangehenden wurde die Erfindung anhand einer bevorzugten Ausführung des Verfahrens sowie deren Varianten beschrieben. Es ist jedoch zu verstehen, dass der Fachmann die beschriebene Ausführungsweise des Verfahrens und ihre Einzelheiten ändern sowie andere Aenderungen einführen kann, ohne die in den Ansprüchen definierten Erfindung zu verlassen.

Insbesondere kann das erfindungsgemässe Verfahren, wie bereits erwähnt, als Code auch OCR-Zeichen oder noch beliebige Symbole verwenden, wenn das Telekopiersystem die nötige Uebertragungsqualität und optische Auflösung hinreichend gewährleistet.

Auch wurde in der Zeichnung, zum Zwecke der Klarheit, ein Beispiel eines Systems zur Ausführung des Verfahrens dargestellt, bei welchem die Systemteile aus getrennten Geräten bestehen. Bevorzugt wird jedoch eine Ausbildungsvariante, bei der die verschiedenen Teile des zur Ausführung des Verfahrens nötigen Systems, die sich in bezug auf die Uebertragungsstrecke sender- bzw. empfängerseitig befinden, als Bauelemente einer sender- bzw. empfängerseitigen Vorrichtung ausgebildet und integriert sind. Die bevorzugte senderseitige Vorrichtung umfasst das Chiffriergerät 1 und das Ausgabegerät 5 sowie das im vorangehenden beschriebene Zubehör. Die bevorzugte empfängerseitige Vorrichtung umfasst das Lesegerät 17, das Dechiffriergerät 18 und das Ausgabegerät 20 sowie das im vorangehenden beschriebene Zubehör.

## Patentansprüche

1. Verfahren zur geschützten Datenübertragung mit einem Telekopiersystem, das ein Sendegerät, ein Empfangsgerät und eine dazwischenliegende Uebertragungsstrecke umfasst, dadurch gekennzeichnet, dass in Kombination
- die ursprünglichen verständlichen Daten einem Chiffriergerät (1) eingegeben werden, das sie verschlüsselt und die resultierenden verschlüsselten Daten in entsprechende erste elektrische Signale (a) wandelt,
- die ersten Signale (a) einem Ausgabegerät (5) zugeführt werden, das ein Dokument (6,10) erstellt, auf dem die verschlüsselten Daten (7) in einem gegenüber Uebertragungsfehlern des Telekopiersystems im wesentlichen unempfindlichen Code lesbar sind,
- das Dokument (6,10) einem Sendegerät (12) zugeführt wird, das die auf dem Dokument lesbaren Daten (7) abtastet und das Resultat der Abtastung in zweite elektrische Signale (b) wandelt,
- die zweiten Signale (b) vom Sendegerät (12) über die Uebertragungsstrecke (14) zum Empfangsgerät (13) übertragen werden,
- das Empfangsgerät (13) aus den empfangenen zweiten Signalen (b) eine Kopie (15) des Dokuments (6,10) erstellt, auf der die Daten in dem gegenüber Uebertragungsfehlern des Telekopiersystems im wesentlichen unempfindlichen Code lesbar sind,
- die Kopie (15) einem Lesegerät (17) zugeführt wird, das die auf der Kopie lesbaren Daten liest und in dritte elektrische Signale (c) wandelt,
- die dritten Signale (c) einem Dechiffriergerät (18) zugeführt werden, das die von den dritten Signalen (c) dargestellten verschlüsselten Daten entschlüsselt und die resultierenden entschlüsselten Daten in vierte elektrische Signale (d) wandelt, und
- die vierten Signale (d) einem Ausgabegerät (20) zugeführt werden, das daraus die ursprünglichen Daten nachbildet und als verständliche Daten zur weiteren Verarbeitung bereitstellt.

2. Verfahren nach Anspruch 1, dadurch gekennzeichnet, dass der verwendete Code im wesentlichen gegenüber solchen Verzerrungen unempfindlich ist, die in einem Telekopiersystem mit zeilenweise in Kombination mit Zeilenvorschub (8) erfolgender Abtastung in Richtung des Zeilenvorschubs auftreten.

3. Verfahren nach Anspruch 2, dadurch gekennzeichnet, dass der Code ein binärer Code ist, dessen logische Werte an einem Kontrast in Helligkeit und/oder Farbe zwischen beschrifteten und unbeschrifteten Teilen des Dokuments unterscheidbar sind.

4. Verfahren nach Anspruch 3, dadurch gekennzeichnet, dass der Code ein Balkencode ("bar code") mit parallel zur Richtung des Zeilenvorschubs (8) orientierten Balken (9) geschrieben ist.

5. Verfahren nach Anspruch 4, dadurch gekennzeichnet, dass die auf der Kopie (15) lesbaren Daten von einer Balkencode-Lesevorrichtung (17) gelesen werden.

6. Senderseitige Vorrichtung zur Ausführung des Verfahrens nach Anspruch 1, mit
- einem Chiffriergerät (1), dem die ursprünglichen Daten eingegeben werden, um sie zu verschlüsseln und die resultierenden verschlüsselten Daten in entsprechende erste elektrische Signale (a) zu wandeln, und
- einem Ausgabegerät (5), dem die ersten Signale (a) zugeführt werden, um daraus ein Dokument (6,10) zu erstellen, auf dem die Daten (7) lesbar sind,
dadurch gekennzeichnet, dass das Chiffriergerät (1) und das Ausgabegerät (5) in der senderseitigen Vorrichtung integriert sind und letztere dazu bestimmt und ausgebildet ist, die auf dem Dokument (6,10) lesbaren Daten (7) in einem gegenüber Uebertragungsfehlern eines Telekopiersystems im wesentlichen unempfindlichen Code zu schreiben.

7. Senderseitige Vorrichtung nach Anspruch 6, dadurch gekennzeichnet, dass der gegenüber Uebertragungsfehlern eines Telekopiersystems im wesentlichen unempfindliche Code ein Balkencode ("bar code") ist.

8. Empfängerseitige Vorrichtung zur Ausführung des Verfahrens nach Anspruch 1, mit
- einem Lesegerät (17), dem die Kopie (15) zugeführt wird, um darin die auf der Kopie lesbaren Daten in dritte elektrische Signale (c) zu wandeln,
- einem Dechiffriergerät (18), dem die dritten Signale (c) zugeführt werden, um die davon dargestellten verschlüsselten Daten zu entschlüsseln und die resultierenden entschlüsselten Daten in vierte elektrische Signale (d) zu wandeln, und
- einem Ausgabegerät (20), dem die vierten Signale (d) zugeführt werden, um daraus die ursprünglichen Daten nachzubilden und als verständliche Daten zur weiteren Verarbeitung bereitzustellen,
dadurch gekennzeichnet, dass das Lesegerät (17), das Dechiffriergerät (18) und das Ausgabegerät (20) in der empfängerseitigen Vorrichtung integriert sind und letztere dazu bestimmt und ausgebildet ist, die auf der Kopie (15) lesbaren, in einem gegenüber Uebertragungsfehlern eines Telekopiersystems im wesentlichen unempfindlichen Code geschriebenen Daten (7) zu lesen und zu entschlüsseln.

9. Empfängerseitige Vorrichtung nach Anspruch 8, dadurch gekennzeichnet, dass der gegenüber Uebertragungsfehlern eines Telekopiersystems im wesentlichen unempfindliche Code ein Balkencode ("bar code") ist.

## Claims

1. A method for the protected transmission of data with a telecopying system comprising a sending device, a receiving device, and a transmission link in between, characterized in that in combination
- the original intelligible data is input into an encryption device (1) that encodes it and converts the resulting encoded data into corresponding first electric signals (a),
- the first signals (a) are fed into an output device (5) that creates a document (6, 10) on which the encoded data (7) is legible in a code that is essentially insensitive with regard to transmission errors of the telecopying system,
- the document (6, 10) is fed to a sending device (12) which scans the legible data (7) on the document and converts the result of the scan into second electrical signals (b),
- the second signals (b) are transmitted from the sending device (12) via the transmitting link (14) to the receiving device (13),
- the receiving device (13) creates a copy (15) of the document (6, 10) out of the received second signals (b), on which copy the data is legible in the code that is essentially insensitive to transmission errors of the telecopying system,
- the copy (15) is fed to a reading device (17) which reads the legible data on the copy and converts it into third electrical signals (c),
- the third signals (c) are fed to a decryption device (18) that decodes the encoded data represented by the third signals (c) and converts the resulting decoded data into fourth electrical signals (d), and
- the fourth signals (d) are fed to an output device (20) which restores from them the original data and supplies them as intelligible data for further processing.

2. A method according to claim characterized in that the used code is essentially insensitive to such distortions that occur in the direction of line feed in telecopying systems with a line-by-line scan in combination with the line feed (8).

3. A method according to claim 2 characterized in that the code is a binary code whose logical values can be distinguished by means of a contrast in brightness and/or colour between written-on and blank sections of the document.

4. A method according to claim 3 characterized in that the code is a bar code with bars (9) being parallel to the line feed direction (8).

5. A method according to claim 4 characterized in that the legible data on the copy (15) is read by a bar code reading device (17).

6. A transmitting-end device for performing the method of claim 1, having
- an encryption device (1) into which the original data is input in order to encode it and convert the resulting encoded data into corresponding first electric signals (a), and
- an output device (5) into which the first signals (a) are fed in order to create a document (6, 10) out of them on which the data (7) is legible,
characterized in that the encryption device (1) and the output device (5) are integrated in the transmitting-end device and that the latter is destined and designed to write the legible data (7) on the document (6, 10) in a code that is essentially insensitive to transmission errors of a telecopying system.

7. A transmitting-end device according to claim 6 characterized in that the code being essentially insensitive to transmission errors of a telecopying system is a bar code.

8. A receiving-end device for performing the method of claim 1, having
- a reading device (17) to which the copy (15) is fed in order to read the legible data on the copy and convert it into third electric signals (c),
- a decryption device (18) into which the third signals are fed in order to decode the encoded data they represent and convert the resulting decoded data into fourth electric signals (d), and
- an output device (20) into which the fourth signals (d) are fed in order to restore from them the original data and make them available for further processing in the form of intelligible data,
characterized in that the reading device (17), the decryption device (18) and the output device (20) are integrated in the receiving-end device and that the latter is destined and designed to read and decode the legible data (7) on the copy (15) written in a code that is essentially insensitive to transmission errors of a telecopying system.

9. A transmitting-end device according to claim 8 characterized in that the code being essentially insensitive to transmission errors of a telecopying system is a bar code.

## Revendications

1. Procédé pour la transmission protégée de données au moyen d'un système de télécopie qui comprend un émetteur, un récepteur et un trajet de transmission situé entre ceux-ci, caractérisé en ce que, en combinaison,
- les données originales compréhensibles sont introduites dans un chiffreur (1) qui les code et qui transforme les données codées résultantes en premiers signaux électriques (a) correspondants,
- les premiers signaux (a) sont acheminés à un dispensateur (5) qui établit un document (6, 10) sur lequel les données codées (7) sont lisibles dans un code essentiellement insensible vis-à-vis d'erreurs de transmission du système de télécopie,
- le document (6, 10) est acheminé à un émetteur (12) qui balaie les données (7) lisibles sur le document et transforme le résultat du balayage en deuxièmes signaux électriques (b),
- les deuxièmes signaux (b) sont transmis de l'émetteur (12) au récepteur (13) en parcourant le trajet de transmission (14),
- le récepteur (13), à partir des deuxièmes signaux reçus (b), établit une copie (15) du document (6, 10) sur laquelle les données sont lisibles dans le code essentiellement insensible vis-à-vis d'erreurs de transmission du système de télécopie,
- la copie (15) est acheminée à un lecteur (17) qui lit les données lisibles sur la copie et qui les transforme en troisièmes signaux électriques (c),
- les troisièmes signaux (c) sont acheminés à un déchiffreur (18) qui décode les données codées représentées par les troisièmes signaux (c) et transforme les données décodées résultantes en quatrièmes signaux électriques (d), et
- les quatrièmes signaux (d) sont acheminés à un dispensateur (20) qui, à partir de ceux-ci, reproduit les données originales et les met à disposition pour un traitement ultérieur sous forme de données compréhensibles.

2. Procédé selon la revendication 1, caractérisé en ce que le code utilisé est essentiellement insensible vis-à-vis de distorsions qui apparaissent dans la direction de l'avancement d'interligne dans un système de télécopie à balayage s'effectuant ligne par ligne en combinaison avec l'avancement d'interligne (8).

3. Procédé selon la revendication 2, caractérisé en ce que le code est un code binaire dont les valeurs logiques sont discernables par contraste de clarté et/ou de couleur entre les parties écrites et non écrites du document.

4. Procédé selon la revendication 3, caractérisé en ce que le code est un code à barres ("bar code") dont les barres (9) sont écrites en étant orientées parallèlement à la direction de l'avancement d'interligne (8).

5. Procédé selon la revendication 4, caractérisé en ce que les données lisibles sur la copie (15) sont lues par un lecteur de codes à barres (17).

6. Dispositif côté émetteur pour la mise en oeuvre du procédé selon la revendication 1, comprenant
- un chiffreur (1) dans lequel on introduit les données originales pour les coder et pour transformer les données codées résultantes en premiers signaux électriques (a) correspondants, et
- un dispensateur (5) auquel on achemine les premiers signaux (a) pour établir à partir de ces derniers un document (6, 10) sur lequel les données (7) sont lisibles,
caractérisé en ce que le chiffreur (1) et le dispensateur (5) sont intégrés dans le dispositif côté émetteur, ce dernier étant défini et réalisé pour écrire les données (7) lisibles sur le document (6, 10) dans un code essentiellement insensible vis-à-vis d'erreurs de transmission d'un système de télécopie.

7. Dispositif côté émetteur selon la revendication 6, caractérisé en ce que le code essentiellement insensible vis-à-vis d'erreurs de transmission d'un système de télécopie est un code à barres ("bar code").

8. Dispositif côté récepteur pour la mise en oeuvre du procédé selon la revendication 1, comprenant
- un lecteur (17) auquel on achemine la copie (15) pour y transformer les données lisibles sur la copie en troisièmes signaux électriques (c),
- un déchiffreur (18) auquel on achemine les troisièmes signaux (c) pour décoder les données codées obtenues à partir de ces derniers et pour transformer les données décodées résultantes en quatrièmes signaux électriques (d), et
- un dispensateur (20) auquel on achemine les quatrièmes signaux (d) pour, à partir de ces derniers, reproduire les données originales et les mettre à disposition pour un traitement ultérieur sous forme de données compréhensibles,
caractérisé en ce que le lecteur (17), le déchiffreur (18) et le dispensateur (20) sont intégrés dans le dispositif côté récepteur, ce dernier étant défini et réalisé pour lire et décoder des données lisibles sur la copie (15), écrites dans un code essentiellement insensible vis-à-vis d'erreurs de transmission d'un système de télécopie.

9. Dispositif côté récepteur selon la revendication 8, caractérisé en ce que le code essentiellement insensible vis-à-vis d'erreurs de transmission d'un système de télécopie est un code à barres ("bar code").
